# EUROPEAN PATENT APPLICATION

(11) **EP 1 564 735 A2**
(43) Date of publication of application: **17.08.2005**
(21) Application number: 05250018.8
(22) Date of filing: 05.01.2005
(51) Int. Cl.: G11B 7/26

(54) **Method and apparatus for making a stamper for patterning CDs and DVDs**

(30) Priority: 08.01.2004 US 535380 P; 03.05.2004 US 837859
(71) Applicant: Komag, Inc., Milpitas California 95035 (US)
(72) Inventor: Bajorek, Christopher H., Los Gatos, California 95032 (US); Calcaterra, Anthony D., Milpitas, California 95035 (US)
(74) Representative: Freeman, Jacqueline Carol

(57) **Abstract**

A method for forming a stamper used in the manufacture of CDs, DVDs, and other types of optical disks comprises forming a substrate by rolling. A layer of material is deposited (e.g. by plating) onto the substrate. Thereafter, a resist layer is formed on the layer of material and patterned. Because the substrate is formed by rolling, it is relatively inexpensive to form the substrate to a desired thickness. Because the layer of material is formed by deposition (e.g. plating), it is relatively inexpensive to ensure that the layer has a very smooth surface (i.e. without necessitating a great deal of polishing).

## Description

### Background of the Invention

This invention pertains to stampers used to manufacture optical data storage media such as CDs and DVDs and methods for making such stampers. (As used herein, optical media includes magneto-optic, phase change and dye based media as well as other types of optical media.)

It is known in the art to use "stampers" to make optical data storage devices. Stampers are discussed, for example, by Boomaars, "The Key to Mastering the In-House Solution", published in April, 2003, One to One, pages 63-64, incorporated by reference. See also EP 0 995 193 B1, EP 0 986 813 B1 and U.S. Pat. 6,238,846.

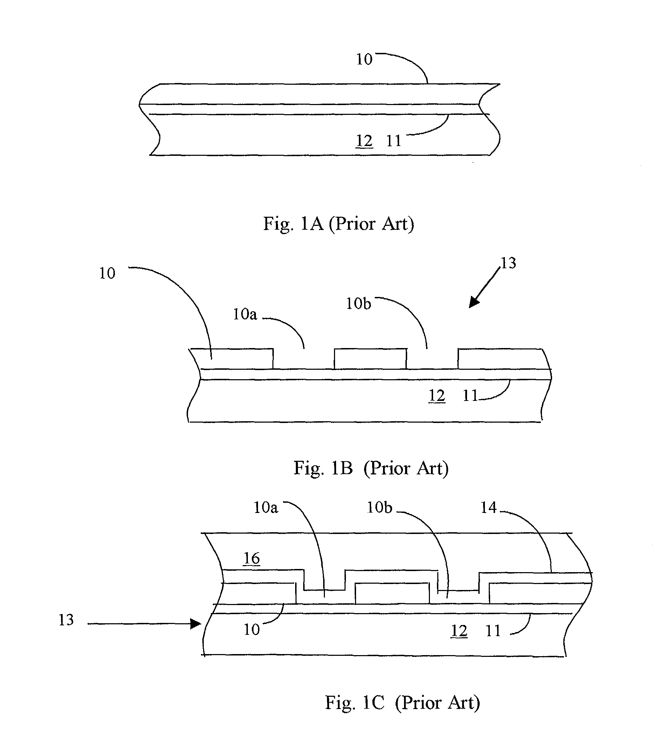

Figs. 1A to 1H schematically illustrate in cross section a first prior art method for making a stamper used to form an optical data storage device. Referring to Fig. 1 A, one spin-coats a silane-based adhesion layer 11 and then a DNQ-based Novolacquer photoresist layer 10 onto a 1.6 mm thick glass substrate 12. One then "prebakes" and then patterns photoresist layer 10 by selective exposure with a laser beam. (The laser wavelength is between 250 and 450 nm.) One then develops the resist, thereby removing portions 10a and 10b of photoresist 10 on substrate 12 (Fig.1B). The structure shown in Fig. 1B is sometimes known as a "master" 13. (It will be appreciated that Fig. 1B only shows a small portion of master 13, and that a full cross section would show numerous areas where portions of photoresist 10 are removed. It will also be appreciated that the figures are not to scale.)

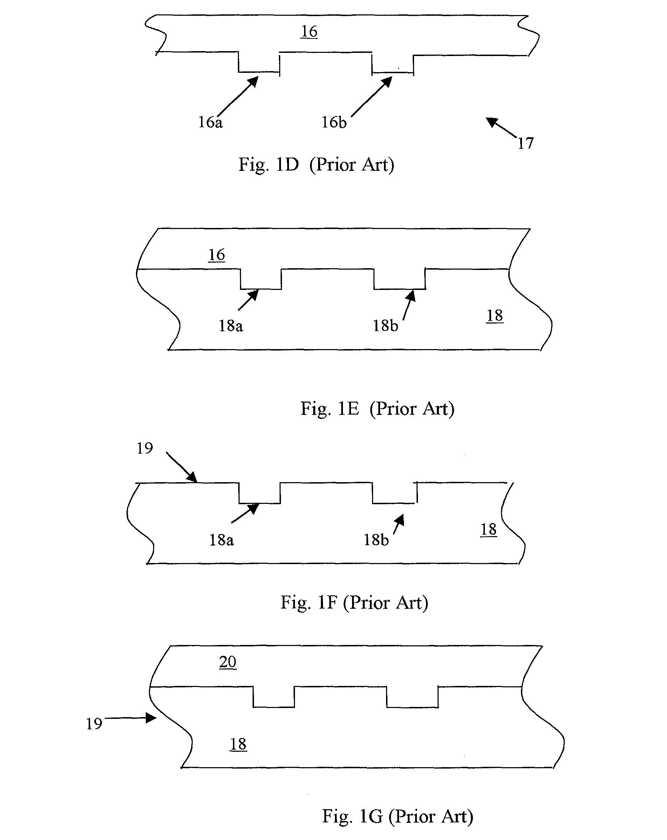

One then applies a thin NiV film 14 to master 13 (Fig. 1C) by evaporation or sputtering. One then plates a Ni layer 16 (about 300 µm thick) onto NiV film 14. Ni layer 16 is then separated from the master (Fig. 1D). (The surface of NiV film 14 is then cleaned to remove any residual photoresist that might cling thereto.) Ni layer 16 contains protrusions 16a, 16b at locations corresponding to the locations of removed portions 10a, 10b of photoresist layer 10. Ni layer 16 is sometimes referred to as a "father" 17.

The surface ofNi layer 16 is oxidized to facilitate separating father 17 from a subsequently formed structure. One then plates a Ni layer 18 onto Ni layer 16 (Fig. 1E) and then separates Ni layer 18 from layer 16. Ni layer 18 comprises depressions 18a, 18b at locations corresponding to the locations of protrusions 16a, 16b. Layer 18 is sometimes referred to as a "mother" 19 (Fig. IF).

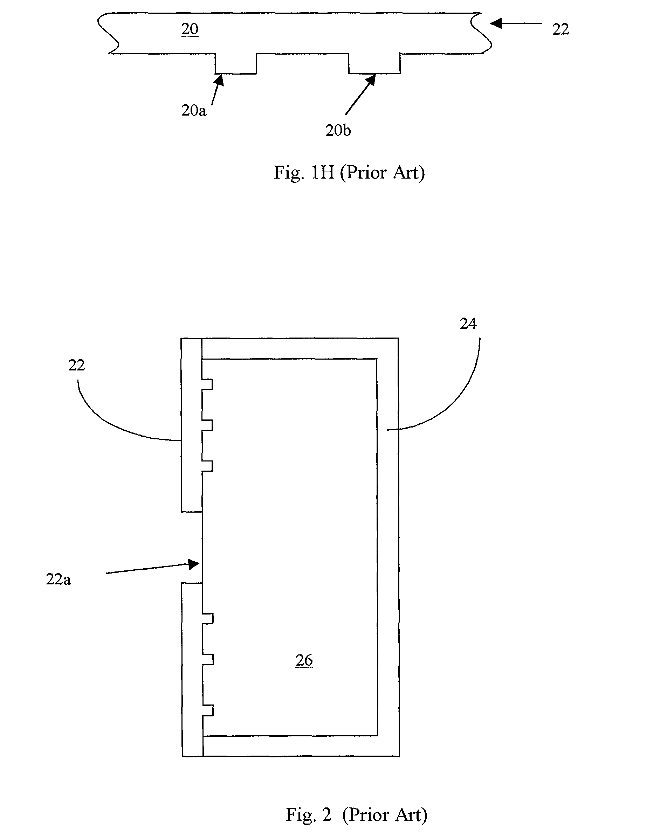

The surface of layer 18 is then oxidized, and a Ni layer 20 (Fig. 1 G) is plated onto mother 19. One then separates Ni 20 from mother 19. Ni layer 20 has protrusions 20a, 20b at locations corresponding to the locations of depressions 18a, 18b. Layer 20 is sometimes referred to as a "son" or "stamper" 22 (Fig. 1H).

During manufacturing of CDs and DVDs, stamper 22 is placed into an injection mold 24 (Fig. 2). (Fig. 2 shows only a small number of protrusions on stamper 22 for ease of illustration. It will be appreciated that a stamper typically includes a much larger number of protrusions.) The injection mold is filled with molten polycarbonate 26 via a centrally defined opening 22a in stamper 22. After polycarbonate 26 cools, it is removed from mold 24. At this point, polycarbonate 26 contains depressions at locations corresponding to the locations of protrusions 20a, 20b. These depressions serve as servo information for the CD or DVD being formed. For the case of read-only CDs and DVDs, the depressions can also correspond to content data and encoding data for error correction. (Content data can include video or still images, sound recordings, computer data in digital form or software.) After being removed from the injection mold, polycarbonate 26 is covered with a thin transparent protective layer (not shown). In addition to protecting polycarbonate 26, this protective layer also ensures that any dust or other undesired particle is not near the focal point of a laser used to read data in the CD or DVD. (For the case of write-once or read/write optical media, one deposits a dye based, magneto-optic or phase change optical recording layer on the polycarbonate substrate before depositing the above-mentioned protective layer. Data can be recorded in and read from this optical recording layer.)

It is known to use one master to form a number of fathers, one father to form a number of mothers, and one mother to form a number of sons.

The above-described method for manufacturing stampers for CDs and DVDs accounts for over 95% of the CDs and DVDs manufactured today. While this procedure is adequate for producing optical media, it is complicated and expensive. In particular, the plating processes and the glass substrate starting material are expensive.

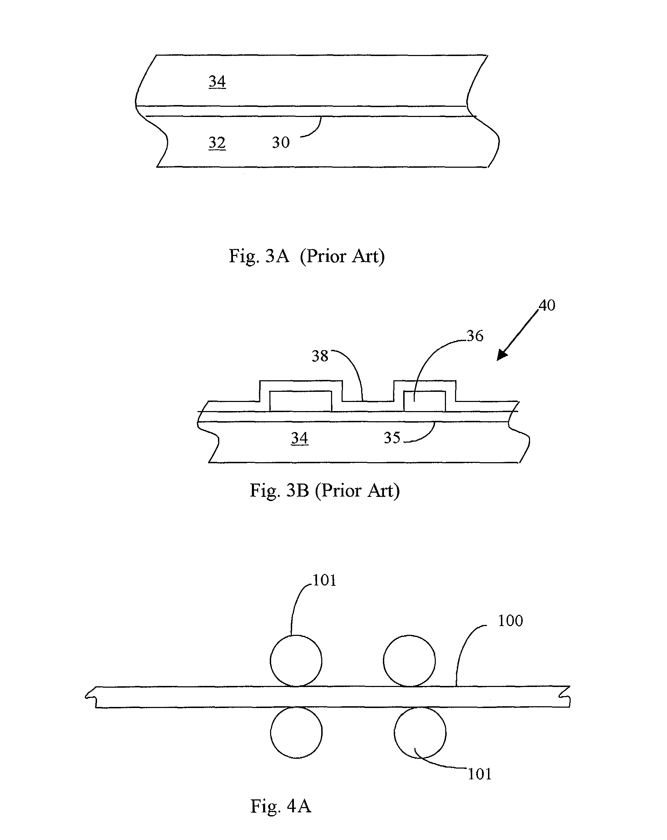

Figs. 3A to 3B illustrate a second prior art method for forming a stamper. Referring to Fig. 3A, one sputters or evaporates a Ni seed layer 30 (e.g. a few hundred angstroms thick) onto a glass substrate 32 and then plates a nickel layer 34 (about 300 µm thick) onto seed layer 30. One then peels nickel layer 34 off of substrate 32. Layer 34 is then stamped to bring it to a desired diameter. Thereafter, one applies a crosslinked undercoat 35 and a DNQ-based image-reversal polymer photoresist layer 36 onto nickel layer 34 (Fig. 3B). Photoresist layer 36 is then pre-baked. A laser beam is then used to write a pattern in photoresist layer 36. After a bake step layer 36 is developed and hard-baked. A thin metalization layer 38 is then deposited over patterned photoresist layer 36.

The structure comprising nickel layer 34, undercoat 35, patterned photoresist layer 36 and metalization layer 38 is a stamper 40. Stamper 40 is placed in a mold along with molten polycarbonate as discussed above in relation to Fig. 2 to form a CD or a DVD. The polycarbonate then cools and hardens. Depressions form in the polycarbonate at locations corresponding to the pattern formed in photoresist layer 36. The depressions constitute content information and/or tracking and servo structures within the CD or DVD. The above-mentioned process is discussed in PCT Patent Application WO 02/09103, published on January 31, 2002, incorporated herein by reference.

As mentioned above, a thin transparent protective layer is bonded to the polycarbonate substrate during the manufacture of the CD or DVD. For the case of read-write or write-once media, a recording layer such as a dye based, magneto-optic or phase change layer is formed over the polycarbonate prior to depositing the protective layer.

While the above-described process provides adequate results, it is also expensive. For example, forming nickel layer 34 by plating is expensive. Accordingly, it would be desirable to provide a less expensive process for making stamper 40.

One might be tempted to form nickel layer 34 by another process, such as rolling. Unfortunately, substrates formed by rolling have many surface defects that would have to be removed by polishing. Such polishing would be excessively expensive. Accordingly, manufacturers tolerate the expense of forming nickel layer 34 by plating because plating results in a very smooth layer.

It would be desirable to provide a smooth substrate for a stamper while minimizing the expense of plating or other deposition process.

Another type of process for making a stamper is discussed in U.S. Patent 5,783,371. In the '371 process, a photoresist layer is formed on a substrate and patterned. The substrate is then machined with an ion beam using the photoresist as a mask. This type of process requires ion beam machining apparatus. It is not believed that the '371 process is in commercial use. This process fundamentally differs from the process of Figs. 1 and 3 in that it relies on etching a substrate to pattern the substrate rather than depositing material over a substrate covered with patterned resist.

### Summary

A method for manufacturing a stamper in accordance with a first embodiment of the invention comprises forming a substrate by a rolling operation (e.g. by rolling an ingot of material). The substrate is typically a metal such as Ni, Cu, or alloys thereof.

A first layer is then deposited on the substrate, e.g. by plating. In one embodiment, deposition comprises electroless plating of a metallic material such as a NiP alloy or other hard material. In another embodiment, deposition is accomplished by electroplating. Alternatively, a vacuum deposition process such as sputtering, evaporation, ion beam deposition, etc., can be used. Optionally, the surface of the first layer is subjected to one or more polishing steps.

Thereafter, the top surface of the stamper is patterned. In one embodiment, this is accomplished by depositing a layer of resist on the first layer. The resist is preferably negative resist, but positive resist can be used as well. In one embodiment, the resist is patterned by selectively exposing the resist to a laser beam and then developing the resist. In another embodiment, instead of using a laser beam, another form of radiation is used, e.g. an e-beam. Alternatively, it can be patterned using a mask and a light source (e.g. visible light, UV light or X-rays). In one embodiment, a metallic layer is deposited (e.g. by sputtering or other vacuum deposition technique) onto the patterned resist.

Optionally, the resist can be "prebaked" (baked before being exposed) and/or baked after being exposed. This enhances the mechanical stability of the resist.

After patterning of the resist, the stamper is inserted into a mold along with a molten material (e.g. polycarbonate). When the polycarbonate cools, it is removed from the mold. The polycarbonate surface reflects the pattern formed in the resist layer. (Instead of using molten polycarbonate, other types of fluid could be placed in the mold to thereafter harden.)

Advantageously, the stamper is provided without having to form most of the thickness of the stamper by a deposition process. Instead, a rolling process is used to form a large part of the stamper thickness. However, because a surface of the stamper is formed by deposition, this surface is very smooth, so that it is unnecessary to perform a great amount of polishing.

In one version of the first embodiment in which the resist is patterned using light, a light insensitive layer can be provided between the first layer and the resist. The light-insensitive layer is typically transparent to the light used to expose the resist.

In accordance with a second embodiment of the invention, a substrate (typically metallic) is plated with an overcoat layer (typically a hard material, e.g. a metal such as a NiP alloy). (In lieu of plating, other deposition techniques such as vacuum deposition can be used to provide the overcoat layer.) The substrate can be manufactured using a rolling process. Typically, a light-insensitive layer (e.g. a polymer) is deposited on the overcoat layer. A resist layer is then deposited thereon. The resist layer is then patterned.

The light-insensitive layer can be a material (e.g. a dielectric) other than a polymer. This layer is typically transparent to light having the wavelength used to pattern the photoresist. It is also typically electrically non-conductive.

A layer of material is then deposited over the patterned resist. In one embodiment, this is accomplished by vacuum depositing a first metal layer over the substrate and patterned resist (e.g. by evaporation or sputtering), and a second metal layer (e.g. Ni or NiP) is plated onto the first metal layer. The second metal layer is then removed from the substrate and resist. The second metal layer can be used as a father.

The surface of the second metal layer can then be oxidized and plated with a third metal layer to form a mother. The third metal layer is then separated from the second metal layer, oxidized, and plated with a fourth metal layer to form a son. The fourth metal layer is separated from the third metal layer and used as a stamper.

One version of this second embodiment permits replacing glass substrate 12 (Fig. 1A) with a less expensive metallic substrate covered with the light insensitive layer. Further, this structure is not as fragile as glass substrate 12. If glass substrate 12 fractures while it is within laser patterning equipment, removing broken pieces of glass from the equipment can be a time-consuming task. Because the metallic substrate is not as fragile as glass, it does not have this disadvantage.

If one merely substituted a photoresist-covered metallic substrate for a photoresist-covered glass substrate, the minimum feature pitch size that could be achieved would be larger than the corresponding minimum feature pitch size that could be achieved with photoresist on glass. Therefore, the data storage density that could be achieved using a metallic substrate would be degraded. Moreover, the cross section of the resultant pit or protrusion will not meet the requirements for the desired data density or polycarbonate molding process. This is because a laser interacts with a metallic substrate differently than with a glass substrate. By providing the above-mentioned light-insensitive layer between the metallic substrate and the photoresist, a smaller minimum feature pitch size and the desired pit or protrusion cross section can be achieved. Therefore, one can replace a glass substrate with a much less expensive metal substrate coated with the light-insensitive layer with reduced or no sacrifice in data storage density.

One can essentially use the polymer-coated metallic substrate in the process of Figs. 1A to 1H in lieu of the more expensive glass substrate 12 without having to make substantial modifications to the patterning process. Since 95% of stamper manufacturing uses the method of Figs. 1A to 1H, this represents a significant saving for the CD and DVD industry.

In a third embodiment of the invention, instead of using a metallic substrate covered with a light insensitive layer, the surface of the metallic substrate is made substantially non-reflective of the laser light used to expose the photoresist. For reasons described below, this is an alternative method for reducing the minimum feature pitch size that can be achieved in the photoresist compared to what would be achieved if the photoresist was directly applied to a reflective metallic substrate.

### Brief Description of the Drawings

Figs. 1A to 1H illustrate a first method in accordance with the prior art for forming a stamper.

Fig. 2 schematically illustrates in cross section a stamper being used to form a CD or a DVD.

Figs. 3A and 3B illustrate a second method in accordance with the prior art for forming a stamper.

Figs. 4A to 4C illustrate a method in accordance with a first embodiment of the invention for forming a stamper.

Figs. 5A to 5C illustrate a method in accordance with a second embodiment of the invention for forming a substrate used to manufacture a master.

These figures are schematic and not to scale.

### Detailed Description

Referring to Fig. 4A, a method in accordance with one embodiment of our invention includes providing a sheet 100. Sheet 100 is typically metallic, and is formed by rolling. During rolling, an ingot of material is fed through rollers 101 to form sheet 100. (Although only two pairs of rollers are shown in Fig. 4A, typically more than two pairs of rollers are used during this process.) As the material passes through the rollers, it becomes progressively thinner until it is in the form of sheet 100. Sheet 100 can be a metal such as a spinodal copper alloy. (Spinodal structures are discussed by D.E. Laughlin and W.A. Soffa in "Spinodal Structures", Metals Handbook, Ninth Edition: Volume 9, Metallography and Microstructures, American Society for Metals, pages 652-654 (1985), incorporated herein by reference.) Spinodal structures have the advantage of being bendable without distortion. However, sheet 100 can be other materials as well, e.g. nickel, stainless steel or brass. In one embodiment, sheet 100 is 277 µm thick, plus or minus 3 µm. However, this thickness is merely exemplary.

Optionally, after rolling, sheet 100 can be lapped or ground, e.g. using a grinding stone comprising diamond particles embedded in epoxy. In another embodiment, such lapping or grinding is not performed.

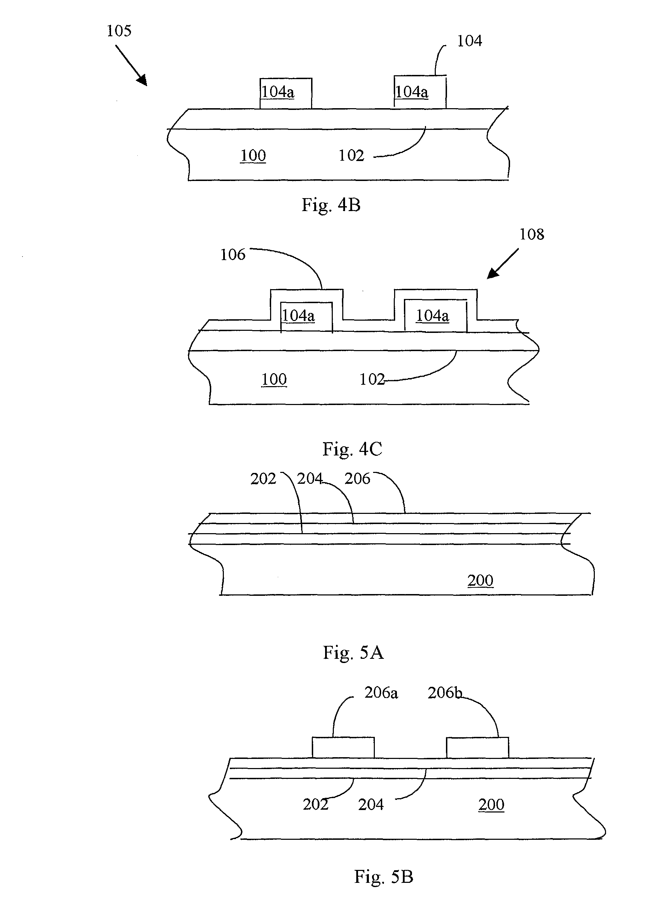

Sheet 100 is cleaned. A layer 102 is then deposited on sheet 100 (Fig. 4B). In one embodiment, layer 102 is metallic, e.g. Ni or a Ni alloy. For example, layer 102 can be an alloy comprising Ni and P electroless plated onto sheet 100. (The NiP alloy is amorphous and harder than pure Ni. In one embodiment, the NiP contains from 7 to 12 wt. % P.) A "strike" voltage can be applied to sheet 100 to facilitate initiating of plating. (In lieu of electroless plating, electroplating , vacuum deposition or other deposition techniques can be used.) Layer 102 is then polished and cleaned. Polishing can be accomplished using one or more polishing steps, and can be performed using mechanical polishing, chemical polishing, or chemical mechanical polishing. Preferably, a single polishing step using chemical mechanical polishing is used. In one embodiment, polishing is performed using a colloidal silica or alumina slurry. The slurry can have one or more additives to improve the slurry performance. One example of a slurry is discussed in U.S. Patent 6,149, 696, issued to Kang Jia, incorporated herein by reference.

In one embodiment, the thickness of the plated sheet is 295 µm plus or minus 5 µm. In yet another embodiment, the thickness tolerance is plus or minus 3 µm. The Ra, Rz and Rmax are typically 3, 30 and 50 nm, respectively. (The Ra, Rz and Rmax are well-known measures of roughness.) However, these values are merely exemplary.

Either before or after plating (but preferably before cleaning and plating), sheet 100 can be formed into the shape of a disk, e.g. by a punching operation. At the conclusion thereof, the OD of the disk is typically about 180 mm plus or minus 0.3 mm. Again, this diameter is merely exemplary.

The disk is then cleaned. Thereafter, a light-insensitive layer 103 (discussed below) and a resist layer 104 are applied to layer 102. Resist layer 104 can be applied by spin coating. Resist 104 can be positive or negative resist, and can be 182.5 nm thick plus or minus 2.5 nm. (Again, these values are merely exemplary.) In one embodiment, resist layer 104 comprises a 15 vol. % solution of Clariant AZ 5214E in AZ Thinner ERB Solvent (propylene glycol monomethyl ether acetate). Resist layer 104 is then heated, e.g. to partially or completely evaporate solvents from layer 104. Thereafter, a laser is used to expose resist layer 104. The laser wavelength can be from 405 to 430 nm, but these values are merely exemplary. Layer 104 is then developed.

In lieu of laser exposure, other forms of radiation can be used to expose layer 104. For example, layer 104 can be exposed by being subjected to an e-beam. Alternatively, layer 104 can be exposed using a lithographic mask and UV light or X-rays. Other types of light can be used to expose layer 104 as well.

As explained below, light-insensitive layer 103 facilitates forming smaller features in resist layer 104 for the case in which the resist is exposed using light. However, in embodiments in which light is not used to expose the resist, or in embodiments in which the advantages of layer 103 are not needed, layer 103 can be omitted.

After developing, layer 104 is hard-baked and coated with a metalization layer 106 (Fig. 4C). At this point in the process, the resulting structure constitutes a stamper 108. The hard bake and deposition of metalization layer 106 make stamper 108 more robust. Thereafter, a punching operation is performed so stamper 108 has an ID and an OD that meets the requirements of the mold within which it is to be used. (The ID and OD are typically 138 mm and 25 mm, respectively, but these dimensions are merely exemplary.)

Stamper 108 is then placed in a mold, along with molten polycarbonate material as discussed above with respect to Fig. 2. As indicated in Fig. 4C, stamper 108 includes protrusions 104a corresponding to the remaining portions of resist layer 104. These protrusions cause corresponding indentations in the polycarbonate material. These indentations are closely spaced in a spiral or concentric configuration to serve as servo information and/or content data and/or error correction data in the optical medium being manufactured.

Also as discussed above, a thin transparent protective layer is then applied to the polycarbonate material. For the case of read-write or write-once media, a recording layer such as a magneto-optic layer, a dye based layer or a phase change recording layer is deposited on the polycarbonate before depositing the protective layer.
(The resulting optical media can include other layers as well.)

One advantage of the above-described method is that it is much easier and much less expensive to produce a stamper without relying on plating to provide the most of the stamper thickness. By depositing a layer onto a substrate produced by rolling, one can achieve the benefit of having a very smooth surface without having to perform a great deal of polishing.

Figs. 5A to 5C illustrate a method in accordance with another embodiment of the invention for forming a stamper. Referring to Fig. 5A, metallic sheet (typically about 1.6 mm thick, and typically comprising an alloy of mostly Al with Mg) is stamped into disk-shaped substrates such as substrate 200. The sheet can be formed by rolling. In one embodiment, the substrates have an OD of 180 mm. Optionally, after stamping, the substrate edges can be chamfered to facilitate handling the substrates without damaging them.

Optionally, the surface of substrate 200 can be subjected to grinding and/or lapping.

Substrate 200 is then cleaned. Thereafter, a NiP alloy layer 202 is electroless plated onto substrate 200. A strike voltage can be applied to substrate 200 to facilitate initiation of the plating. (In an alternative embodiment, instead of electroless plating, other deposition methods such as electroplating or vacuum deposition can be used. Also, instead of using NiP to form layer 202, other hard alloys or elements, e.g. Cr, can be formed on substrate 200.) Layer 202 can then be polished and cleaned as described above with respect to layer 102. A light-insensitive layer 204 (typically electrically non-conductive, e.g. a polymer or an inorganic dielectric material) and a resist layer 206 are then deposited on NiP layer 202. Resist layer 206 can be positive resist or negative resist, but negative resist is preferred. In one embodiment, resist layer 206 comprises the above-mentioned solution comprising Clariant AZ 5214E, and has a thickness of 190 nm plus or minus 2.5 nm. Alternatively, resist layer 205 can have a thickness of 187.5 plus or minus 2.5 nm. Again, these parameters are merely exemplary.

Resist layer 206 is baked, and then a pattern is written into resist layer, e.g. using a laser (e.g. having a wavelength between 405 and 430 nm) to expose portions of the resist followed by development. However, other techniques and forms of radiation can be used to expose resist layer 206, e.g. an e-beam, or a light source in combination with a lithographic mask. The light source can provide x-rays, ultraviolet light, or visible light. After exposure, resist layer 206 is developed and hard-baked, leaving resist protrusions 206a, 206b on top of layer 204.

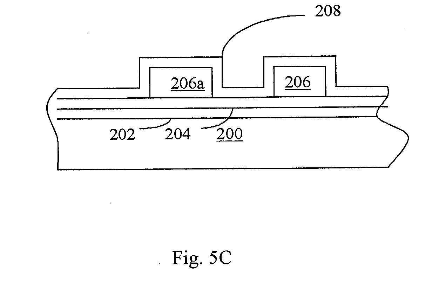

After resist layer 206 is patterned, a layer of material 208 is deposited thereon (Fig. 5C). Layer 208 can be a metal such as Ni or an alloy thereof, deposited by a vacuum deposition process such as sputtering, evaporation or ion beam deposition. The structure of Fig. 5C can be used as a master in lieu of master 13 discussed above (Fig. 1B), and can be used to form a stamper as described above with reference to Figs. 1C to 1H. In such a process, one can plate a material such as Ni or a Ni alloy onto layer 208 in a manner similar to layer 16 discussed above. The advantage of using the structure of Fig. 5C as a master instead of the structure of Fig. 1B is that glass substrate 12 is more expensive than substrate 202. (After plating, one typically separates the deposited Ni from resist 206 and layer 204, and cleans the Ni to remove any residual portions of layers 204 and 206 if necessary.)

Layer 204 helps reduce the minimum feature size that can be formed in resist layer 206 and optimize the cross section profile of the protrusions or pits that can be formed in resist layer 206. If one formed resist 206 directly on NiP layer 202, light reflecting off layer 202 would form a standing wave such that destructive interference would occur at the interface between resist 206 and NiP layer 202. Providing layer 204 ensures that the point of maximum destructive interference is not located at the bottom of resist layer 206. This facilitates forming smaller features and optimal cross section profiles in resist layer 206. In order to perform this function, layer 204 should be transparent, at least for light having the wavelength used to pattern resist layer 206. (In one embodiment, layer 204 has a thickness that prevents the point of maximum destructive interference from being within resist layer 206.)

As mentioned above, layer 204 can be a polymer or a dielectric material. For the case of a polymer, layer 204 can be applied by a spinning process. For example, layer 204 can comprise a solution of 4 vol. % Clariant AZ 5214E in AZ Thinner ERB Solvent that has been heated (or otherwise subjected to a cross-linking reaction). In such an embodiment, layer 204 can be 30 nm plus or minus 2 nm thick. For the case of a dielectric material, layer 204 can be sputtered. One example of a material that can be used for layer 204 is oxidized or partially oxidized NiP.

In lieu of making layer 204 transparent, if layer 204 is non-reflective (e.g. light absorptive), at least at the wavelength used to pattern resist 206, the above-mentioned reflection and interference will be prevented or minimized. For example, layer 204 can be black. Alternatively, if substrate 202 is non-reflective, layer 204 need not be formed. (This discussion of layer 204 also applies to layer 103.)

Alternatively, instead of forming NiP layer 202, substrate 200 is subjected to an anodizing step to form an oxidized surface layer thereon. In one embodiment, the oxidized surface layer renders layer 204 unnecessary.

In yet another embodiment, layer 202 can be a plated composite material containing a mixture of one or more metallic phases and one or more dielectric phases, e.g. a mixture of NiP and teflon (PTFE) deposited from a plating bath. The percentage of the dielectric material can be adjusted to achieve specific optical reflective and absorptive properties to thereby render layer 204 unnecessary.

In yet another embodiment, alloys or compounds containing one or more dielectric phases (e.g. oxides or amides) can be used to form layer 202. (The amide can be a metal nitride.) The percentage of the dielectric phase can be selected to achieve desired optical reflective and absorptive properties to thereby render layer 204 unnecessary. (Again, the above-mentioned techniques can be used to render layer 103 unnecessary.)

If radiation other than light is used to pattern resist layer 206, layer 204 can be eliminated. Similarly, if the advantages of layer 204 are not needed, layer 204 can be eliminated.

As mentioned above, methods in accordance with the invention have a number of advantages over the prior art processes discussed above with respect to Figs. 1 and 3. Methods in accordance with the invention also have advantages with respect to the above-described '371 patent. For example, it will be appreciated that embodiments of the above-described methods do not typically require exotic and expensive ion machining apparatus for machining substrates or otherwise etching substrates.

It is noted that this application describes a master as a structure used to form a father, which in turn is used to form a mother, which in turn is used to form a son, or stamper. It will be apparent in light of this disclosure that in some embodiments, a master can be used to form a stamper without requiring the creation of any intervening structures. For example, a master can be used to create a father, which in turn can be used as a stamper without the intervening creation of an intervening structure. Similarly, in an alternative embodiment, the pattern in the master can be the negative of the pattern in a conventional master. In this alternative embodiment, the master is used to form a mother, which in turn is used to form a son (the son serving as a stamper). Thus, different numbers of intervening structures can be provided between the formation of the master and the stamper.

While the invention has been described with respect to specific embodiments, those skilled in the art will appreciate that changes can be made in form and detail. For example, different types of laser beams (having different wavelengths), and different types of resist can be used. (The laser beam wavelength and resist type can be selected depending upon the size of the feature pitch one uses during the process.) The process of exposing and developing resist can comprise an "image reversal process" as described in U.S. Patent 6,423,477, issued to Engelen or U.S. Patent 6,159,664, Reuhman-Huisken (each incorporated herein by reference). In lieu of rolling, the metallic substrates used during the above-described methods can be formed by casting, molding or extruding. (Materials other then metal, e.g. plastic, can be used to form the substrates.) In some embodiments of the invention, the above-described light-insensitive layers are not formed. It will also be appreciated that additional layers can be formed during the above-described methods. Accordingly, all such changes come within the invention.

## Claims

1. A method for use during the manufacture of optical media comprising:
providing a substrate by rolling, molding, extruding or casting;
forming a first layer over the substrate;
forming a patterned resist layer over the first layer;
providing a second layer of material over said patterned resist layer; and
separating said second layer from said patterned resist layer, said second layer comprising a surface having a pattern formed therein that is the negative of the pattern in said resist layer.

2. Method of claim 1 wherein said substrate is formed by rolling, and said rolling is performed by passing metallic substrate material through rollers.

3. Method of claim 1 or 2 wherein said depositing comprises electroless plating.

4. Method of claim 1, 2 or 3 wherein said substrate, first layer and patterned resist layer comprise a stamper and said providing of said second layer over said first layer comprises placing said stamper in a mold, placing molten material in said mold, and allowing said molten material to cool and harden, said cooled, hardened material comprising said second layer.

5. Method of claim 4 wherein said molten material comprises polycarbonate, said method further comprising incorporating said polycarbonate into a CD or a DVD after said cooling, hardening and separating.

6. Method of claim 4 or 5 further comprising providing a metallic layer over said patterned resist layer prior to said providing said second layer, wherein said substrate, first layer, patterned resist layer and metallic layer comprise said stamper.

7. Method of claim 1 wherein said substrate, first layer and patterned resist layer comprise a master and said second layer of material comprises a father, said method further comprising forming a stamper by transferring the pattern in said father into a mother, and then transferring the pattern in said mother into stamper material.

8. Method of claim 1 wherein said first layer and patterned resist layer comprise a master and said second layer of material comprises a mother, said method further comprising forming a stamper by transferring the pattern in said mother into stamper material.

9. Method of claim 7 or 8 further comprising forming a metallic layer over said patterned resist layer prior to forming said second layer of material.

10. Method of claim 7 wherein said forming a stamper comprises:
forming a third layer of material over said second layer of material, a surface of said third layer having a pattern therein that is a negative of the pattern in the surface of said second layer;
separating said third layer of material from said second layer of material; and
forming stamper material over said third layer of material, a surface of said stamper material having a pattern therein that is a negative of the pattern in the surface of said third layer of material.

11. Method of any one of the preceding claims wherein said first layer, as deposited, is substantially smoother than said substrate material, reducing or eliminating the amount of polishing that must be performed during said method.

12. Method of claim 1 further comprising forming a light-insensitive layer on said first layer, and said forming a patterned resist layer comprises forming resist on said light-insensitive layer and selectively exposing said resist layer to light, said light-insensitive layer being substantially insensitive to the light that is used to expose said resist layer.

13. Method of claim 12 wherein said forming a patterned resist layer comprises forming a resist layer over said first layer and selectively exposing said resist layer to radiation, wherein the structure under said resist layer is substantially non-reflective of said radiation.

14. A stamper or master comprising:
a substrate formed by rolling, casting, molding or extruding;
a first layer deposited over said substrate; and
a patterned resist layer formed over said first layer.

15. Structure of claim 14 further comprising a metallic layer formed over said patterned resist layer.

16. Structure of claim 14 or 15 further comprising a layer between said first layer and said resist that is substantially insensitive and transparent to radiation used to pattern said resist.

17. Structure of claim 14, 15 or 16 wherein the structure under said patterned resist layer is substantially non-reflective of radiation used to pattern said resist.

18. A method for forming a master or stamper comprising:
forming a substrate by rolling, casting, molding or extruding;
depositing a first layer over said substrate; and
forming a patterned resist layer.

19. Method of claim 18 wherein said forming a patterned resist layer comprises depositing resist, selectively exposing said resist to radiation and developing said resist, said method further comprising forming a layer between said first layer and said patterned resist layer that is substantially transparent to and insensitive to radiation used to pattern said resist.

20. Method of claim 18 or 19 wherein said forming a patterned resist layer comprises depositing resist, selectively exposing said resist to radiation and developing said resist, the structure over which said resist is formed being substantially non-reflective of said radiation used to pattern said resist.
